# EUROPEAN PATENT SPECIFICATION

(11) **EP 2 587 145 B1**
(45) Date of publication and mention of the grant of the patent: **27.08.2014**
(21) Application number: 10853754.9
(22) Date of filing: 22.06.2010
(51) Int. Cl.: F23G 5/00, F23G 5/04, B09B 3/00, F27D 13/00

(54) **METHOD FOR THE POLLUTION-FREE THERMAL PROCESSING OF SOLID MUNICIPAL WASTE AND PLANT FOR CARRYING OUT SAID METHOD**
VERFAHREN ZUR KONTAMINATIONSFREIEN THERMISCHEN VERARBEITUNG VON FESTSTOFFHAUSMÜLL UND ANLAGE ZUR AUSFÜHRUNG DIESES VERFAHRENS
PROCÉDÉ DE TRAITEMENT THERMIQUE SANS DÉCHETS DE DÉCHETS SOLIDES DE VOIRIE ET APPAREIL DE SA MISE EN OEUVRE

(43) Date of publication of application: 01.05.2013
(73) Proprietor: Obchestvo S Ogranichennoj Otvetstvennostju Promishlennaja Kompanija "Tehnologija Metallov", Chelyabinsk 454129 (RU)
(72) Inventor: GOLUBEV, Anatolij Anatoljevich, Chelyabinsk 454091 (RU); GUDIM, Jurij Alexandrovich, Chelyabinsk 454017 (RU)
(74) Representative: Bucher, Ralf Christian
(86) International application number: PCT/RU2010/000347
(87) International publication number: WO 2011/162632

(56) References cited:
- EP-A1- 0 767 342
- EP-A1- 1 865 256
- DE-A1-102005 046 408
- RU-C1- 2 147 712
- RU-C1- 2 345 141
- RU-C2- 2 343 353
- RU-C2- 2 343 353
- YU. A. GUDIM ET AL.: 'Bezotkhodnaya tekhnologiya vysokotemperaturnoy utilizatsy nesortirovannykh tverdykh kommunalnykh otkhodov.' EKOLOGIYA I PROMYSHLENNOST RUSSIA, [Online] February 2009, Retrieved from the Internet: <URL:http://www.technologiya-metallov.com/r ussisch/publikationen. html> [retrieved on 2011-02-22]

## Description

The invention relates to the metal industry and heat power engineering and can be used for processing solid municipal wastes (SMW), medical wastes, and some types of solid industrial wastes.

Accumulation of solid wastes produced by human activities requires efficient methods to be developed to process these types of wastes, particularly municipal (domestic) wastes.

Common methods are now used for processing solid municipal wastes after they have been graded to remove and recycle packaging cardboard, paper, glass, plastics, and scrap metal and to reduce the weight of wastes to be processed. Waste grading is a costly and laborious operation.

Methods used across the world to process solid municipal wastes have a significant deficiency because they required a relatively large quantity of toxic processing products to be buried in landfills.

Incineration is the most efficient and quickest method of processing solid municipal wastes. SMW incineration produces much heat that is used to generate electric power with a relatively small quantity of toxic processing products such as ash and dust as leftovers. SMW incineration, though, is complicated significantly because of the low average calorific value of damp wastes and large quantities of incombustible elements such as glass, bones, metal, construction debris, and so on.

For these reasons, and because of air being used to oxidize the organic components of garbage, garbage is incinerated in prior art processes at relatively low temperatures (850°C to 1,150°C). As a result, it is complicated, difficult or impossible to incinerate the wastes completely by heating and combusting because of formation of substances, including dioxins and furans, that are extremely harmful to humans and the environment.

Waste combustion at low temperatures results in conversion of inorganic components into hard ash that has a significant specific surface area and contains large quantities of harmful elements that are leached easily in storage by atmospheric and soil moisture. Hard ash is buried in special-purpose landfills.

Dust (fly ash) entrapped in gas cleaning facilities contains a large proportion of heavy metals, dioxins, furans, and other harmful elements and must be buried in special landfills.

Several prior art waste processing methods were developed to eliminate some of the difficulties confronting waste incineration [1-5] by combusting solid municipal wastes in a layer of liquid slag or in a slag melt at a temperature between 1400°C and 1500°C as they are charged into a melt and blowing an oxygen-containing gas into the melt to stir the SMW therein [1-2].

In other prior art SMW processing methods, a substance having a high content of calcium oxide or calcium sulfide [1 and 4], together with compounds of nonferrous metals [2], is added to the slag melt to reduce the melting point of the resultant slag.

To raise the waste incineration temperature, the prior art methods comprise drying damp solid municipal wastes with incineration process gases or in the working space of the incinerator [3], or in the charging system before the wastes are charged into the incinerator [4].

A further method [5] comprises drying and heating solid municipal wastes on the fire grate in the gas space over the slag melt as heated air is further blown in above the layer of wastes. Under this method, the projection of the waste layer area lies fully or partially beyond the slag melt surface. Hot products of hydrocarbon fuel combustion are blown through the slag melt to raise the temperature and efficiency of the process. Air heated to between 500°C and 600°C is blown in above the surface of the slag melt bath.

The prior art methods [1-5] have deficiencies preventing them from being used with a practical effect. It is very hard to incinerate SMW in a layer of molten slag because the wastes have a density (around 1 kg/dm³) smaller than the density of molten slag (3-4.5 kg/dm³) and tend to float up to the surface even though an oxygen-containing gas [1 and 2] or hot products of hydrocarbon combustion are blown through the slag. Besides, oxidation (combustion) of organic waste components is slow and incomplete (carbon is only oxidized to CO) because of the low oxidizing potential of slag, and CO has to be combusted to CO₂. SMW drying in the working space of the incinerator [3] requires additional energy to vaporize the moisture and increases the volume of gases exhausted from the incinerator, lowering the incineration temperature and increasing operating and investment costs of gas cleaning facilities. This process, though, does not prevent the possibility of dioxins and furans forming as the wastes are heated slowly within the temperature range of 180°C to 600°C. Drying in charging devices [4] is also potentially dangerous because of formation of dioxins and furans and, therefore, uncontrollable emissions of dioxins and furans into the atmosphere.

Even though addition of materials containing calcium oxide or calcium sulfide to the slag lowers the slag melting point, they cause the slags produced to disintegrate under the effect of atmospheric and soil moisture and be unsuitable for use in construction. Besides, the prior art methods cannot use dust trapped in gas cleaners; they cause frequent stoppages of the incinerators in which they are used as a result of intensive destruction of incinerator lining by chemical corrosion, and, in general, they are unsuitable for efficient continuous waste-free processing of solid municipal wastes.

The applicant has selected a further method [6] for waste-free thermal processing of solid municipal wastes (Patent RU 2343353) as the closest prior art of the claimed method.

In the closest prior art method, organic SMW components are incinerated on the surface of molten slag superheated to between 1500°C and 1600°C; the slag is made up of mineral components of the wastes and fluxes added together with the SMW in an atmosphere of oxygen blown in by combined burner-tuyeres at supersonic velocity in the melting chamber having a housing that is cooled by a liquid metal coolant, said chamber being arranged in the mouth of a power boiler using the heat of the exhaust gases, the solid municipal wastes being dried to a moisture content of 5% to 12% before they are directed into the charging system of the melting chamber in a conveyor enclosed in an airtight casing by gaseous nitrogen heated to 150°C by the heat accumulated by the liquid metal coolant as it cools the housing of the melting chamber.

Moreover, the dust trapped in the gas cleaning system of the SMW processing unit is blown by injectors into the slag melt of the melting chamber to be melted and assimilated by the slag. The composition and properties of the slag obtained during SMW processing are adjusted by additives of industrial ferrous and nonferrous wastes and ash derived at thermal electric power plants and charged together with the SMW into the melting chamber.

The closest prior art method for waste-free thermal processing of solid municipal wastes has the following deficiencies:
- low technological and economic efficiency of the process;
- low output capacity because of the relatively low temperature of 150°C used to dry damp solid municipal wastes;
- unreasonably large size of the conveyor device;
- the wastes are not heated rapidly within the temperature range of 180°C to 600°C and, as a result, dioxins and furans are produced within this temperature range;
- the wastes are not heated rapidly because of the irrational ratio of the weight of the wastes charged in a time unit to the weight of the molten slag in the melting chamber;
- the wastes are not charged through airtight conduits;
- the temperature of gases in the free space of the melting chamber is not high;
- the speed at which excess slag is drained from the melting chamber and its control method are irrational;
- no optimal limits are given for the specific requirements of gaseous oxygen for incinerating organic components of the wastes; and
- no mention is made of the rational quantity of fluxes used for adjusting the composition and properties of the slag in the melting chamber.

Still another prior art unit [7] for processing materials containing ferric oxides (Patent RU 2344179) was selected by this applicant as the closest related prior art unit for waste-free heat processing of solid municipal wastes.

In this prior art unit that has a melting chamber provided with a housing cooled by a liquid metal coolant, its working space containing slag melt to be reduced and reduced metal melt, a cooling circuit for a metal coolant, and systems for charging materials, using heat and cleaning gases, drawing off the metal and slag melts, the melting chamber is provided, for melting the charge and heating the slag melt, with fuel-oxygen burners at a height of 0.3 to 0.8 m above the maximum level of the slag melt, injectors provided at a height of 0.10 to 0.40 m above the maximum level of the reduced metal melt to blow in carbon-containing materials and dust trapped in the gas cleaner; the melting chamber further has a common opening in the side generating surface of the housing for charging materials by conveyor and removing process gases above slag melt level; nitrogen is used in the cooling circuit heat exchangers to cool the metal coolant and thereafter also to blow carbon-containing materials and dust into the slag melt and to inject nitrogen through porous taps provided in the bottom lining to agitate the melt; and the chutes to discharge the slag and metal melts are offset relative to one another to allow the metal melt and the incompletely reduced slag melt to be poured simultaneously into a single ladle.

The prior art unit for continuously processing materials containing ferric oxides has the following deficiencies:
- the melting chamber has a common opening for charging materials and exhausting process gases, and when dried solid municipal wastes of low density (less than 1 kg/m³) are charged into the melting chamber, the hot process gases exhausted from the chamber at a high velocity entrap large quantities of wastes and carry them to the exhaust heat boiler that may be put out of service as a result;
- when solid municipal wastes are charged into the opening that also serves to exhaust process gases, the time when a significant volume of said gases is exposed to a high temperature may be less than 2 or 3 seconds, too short for gases exhausted into the atmosphere to be completely free from dioxins and furans;
- the charging device delivering solid municipal wastes to the melting chamber is not properly sealed off, for which reason uncontrollable emissions into the atmosphere may occur;
- no device is available to maintain an invariable quantity of slag in the melting chamber and drain excess slag continuously from the chamber; and
- heat removed from the metal coolant by nitrogen in the secondary cooling system (cooling circuit heat exchangers) is used incompletely and with low efficiency in the process.

The claimed method and unit for waste-free thermal processing of solid municipal wastes are designed for improving the efficiency of waste-free processing of wastes and their disposal in an environment-friendly process.

The claimed unit for waste-free thermal processing of solid municipal wastes is further designed to improve the design of the device for continuous charge processing, raise its efficiency, and improve its performance.

The technical result of the claimed method and unit for performing the same consists in remedying the deficiencies of the closest prior art inventions, in particular, by:
- increasing the technical and economic efficiency of solid municipal waste processing;
- improving the output capacity of the method and unit;
- heating rapidly the wastes delivered into the chamber by raising the heating rate of wastes charged within the temperature range of 180°C to 600°C, the most hazardous range as regards formation of dioxins and furans, and preventing formation of dioxins and furans;
- sealing off the charging of solid municipal wastes into the melting chamber;
- raising the temperature of gases in the free space of the melting chamber;
- disposing of wastes in an environment-friendly process by preventing formation of dioxins and furans by maintaining a rational ratio of the weight of wastes charged per time unit to the weight of the molten slag in the melting chamber;
- maintaining continuously a rational rate of excess slag draining from the melting chamber;
- optimizing the flow rate of gaseous oxygen for incinerating the organic components of wastes;
- determining a rational addition rate of fluxes to adjust the composition and properties of the slag in the melting chamber;
- separating the paths used to charge the wastes into the chamber and remove hot process gases from the chamber and direct them to the exhaust heat boiler;
- increasing the time the entire volume of process gases is held at high temperatures (1,800°C or more); and
- increasing the rate of effective use of heat withdrawn from the metal coolant by nitrogen in the heat exchangers of the secondary cooling system of the melting chamber.

The technical result is achieved by the following inventions combined by a common inventive concept.

The technical result is achieved by a method for waste-free thermal processing of solid municipal wastes according to claim 1.

Further, oxygen required to oxidize the organic components of solid municipal wastes is blown into the working space of the melting chamber by combined burner-tuyeres at a rate of 250 to 390 nm³/ton of dried wastes.

Also, the fluxes needed to adjust the composition and properties of the slag are charged into the melting chamber together with solid municipal wastes at a rate of 10% to 20% of the weight of dry wastes.

The technical result is achieved in a unit for waste-free thermal processing of solid municipal wastes according to claim 4.

Furthermore, the opening serving to charge solid municipal wastes and fluxes into the melting chamber is provided in the shorter or longer side wall of the housing opposite to the gas exhaust opening of the melting chamber.

Also, the opening for withdrawing hot spent process gases has a diameter within the range of 0.5 to 2.0 m.

Drying of solid municipal wastes in the rotating furnace with gaseous nitrogen heated to between 200°C and 300°C by the heat given off by the liquid metal coolant in the secondary cooling system of the melting chamber raises the drying process rate, reduces the moisture content of the wastes, increases the efficiency of the rotating furnace and the unit as a whole, allows the heat withdrawn from the melting chamber housing to be used with greater effect, reduces the total heat losses, and, accordingly, increases the efficiency of the unit in operation.

The ratio of the weight of the dried wastes charged into the melting chamber per time unit (one minute) to the weight of molten slag in the working space of the melting chamber within m : M = 0.0067-0.0045, wherein: m is the weight of dried wastes charged into the melting chamber and M is the weight of the molten slag in the working space of the melting chamber, prevents accidental blowouts of dust and gas from the working space and assures very rapid heating of the wastes charged within the temperature range of 180°C to 600°C, the most hazardous range as regards formation of dioxins and furans, and prevents completely the undesirable formation of these harmful compounds.

It is unreasonable to depart from the optimal ratio of the weight of dried wastes charged into the melting chamber to the weight of molten slag per time unit (one minute).

The m : M = 0.0070 ratio of the weight of wastes charged per minute to the slag weight is irrational because the wastes are not heated rapidly within the temperature range of 180°C to 600°C, which is the most hazardous range from the viewpoint of formation of dioxins and furans and does not rule out completely the undesirable formation of these harmful compounds.

The m : M = 0.0040 ratio decreases the efficiency of the method because of the low charging rate.

The temperature of the gaseous phase maintained within 1800°C to 1900°C over the free space of the melting chamber also contributes to very rapid heating of the wastes charged, and to the destruction (decomposition) of harmful substances, including dioxins and furans, that were already contained in the wastes charged.

Removal of spent process gases from the melting chamber to the exhaust heat boiler through the opening provided with a cooled pipe in the shorter wall of the chamber helps reduce dust blowout from the unit and increase the time the hot process gases are exposed to high temperatures, and, therefore, assures destruction (decomposition) of dioxins and furans present accidentally in the working space of the chamber.

Continuous rate of excess slag draining from the chamber maintained at a level at which there is always a constant quantity of slag in the melting chamber assures the required rapid heating of the wastes changed into the chamber and a high oxidation rate of the organic components of the wastes and melting of mineral components of the wastes. Accordingly, the output capacity of the process and efficiency of the unit in operation are increased.

Oxygen blown through combined burner-tuyeres into the working space of the melting chamber to oxidize the organic components of solid municipal wastes at a rate of 250 to 390 nm³/ton of dry wastes makes the unit efficient in operation at a high output rate.

Fluxes charged together with solid municipal wastes to adjust the composition and properties of slag at a rate of 10% to 20% of the weight of dry wastes help produce slag in the working space of the melting chamber that is, in composition and properties, essential for flawless operation of the unit and is suitable for use in construction and safe for humans and the environment.

The opening 0.5 to 2.0 m in diameter (for different sizes of the melting chamber and output capacity of the unit) provided in a shorter wall of the melting chamber to remove hot spent process gases and connected to an exhaust heat boiler by a pipe of the same diameter reduces escape of dust from the melting chamber and increases the time process gases are exposed to high temperatures, thereby eliminating dioxins and furans in gas emissions into the atmosphere.

The opening for solid municipal wastes and fluxes to the charged into the melting chamber in the side thereof opposite to the location of the gas removal opening reduces dust blowouts and prevents waste components from being carried from the chamber to the exhaust heat boiler.

The airtight mechanism to charge solid municipal wastes in measured quantities into the melting chamber facilitates rapid heating of the wastes charged within the temperature range of 180°C to 600°C and prevents formation of dioxins and furans in this temperature range and uncontrolled emission of dust and gases into the atmosphere.

The device provided in the outlet opening for slag draining maintains a constant quantity of slag in the melting chamber as excess slag is drained continuously and allows the wastes charged to be heated and incinerated rapidly.

Connection of the secondary cooling system of the melting chamber directly to the rotating furnace for drying solid municipal wastes for delivering nitrogen heated to between 200°C and 300°C thereto allows damp wastes to be heated rapidly and thoroughly and the output capacity of the unit to be increased.

The idea of the claimed method and unit for performing the same is illustrated in the following drawings:

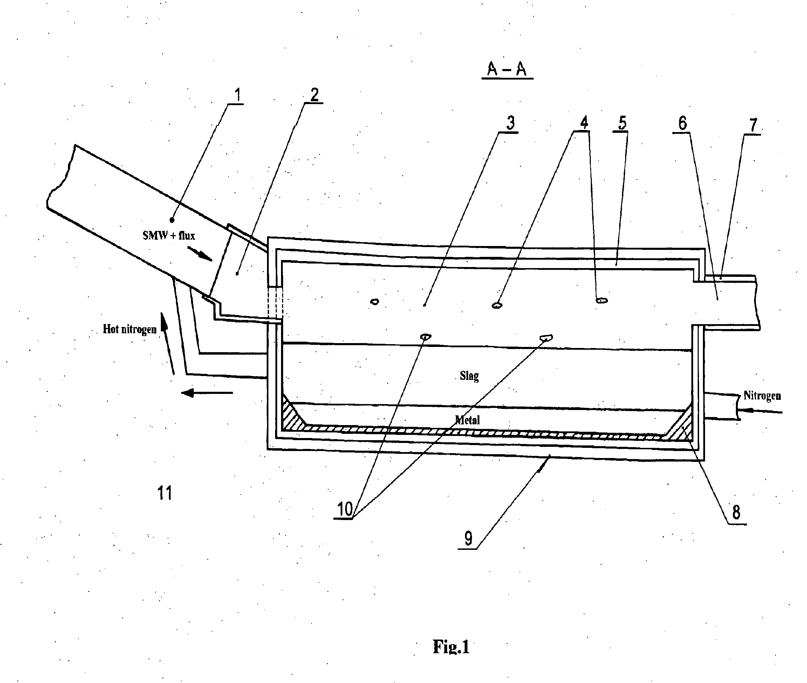

FIG. 1 illustrates waste-free thermal processing of solid municipal wastes (view of the unit for waste-free thermal processing of solid municipal wastes along the A-A line).

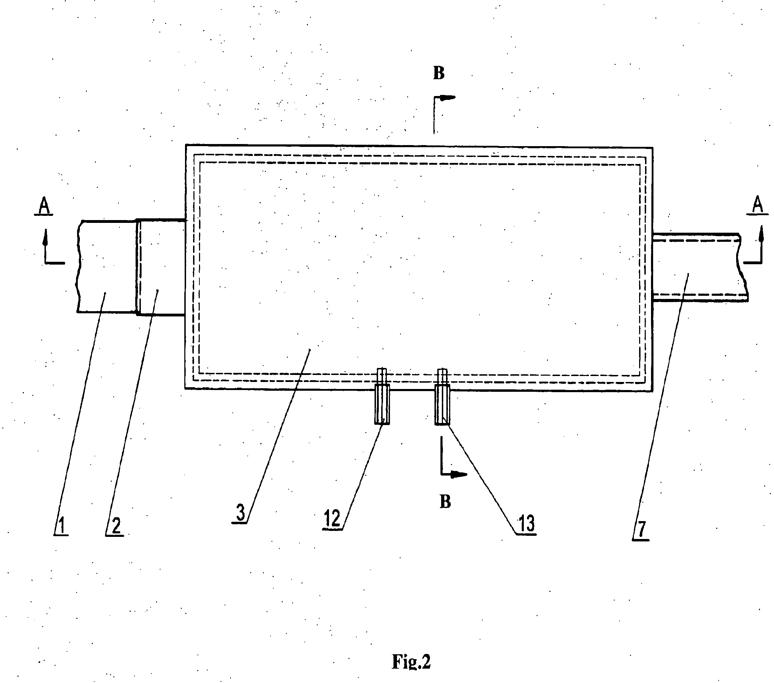

FIG. 2 is a top view of the unit for waste-free thermal processing of solid municipal wastes.

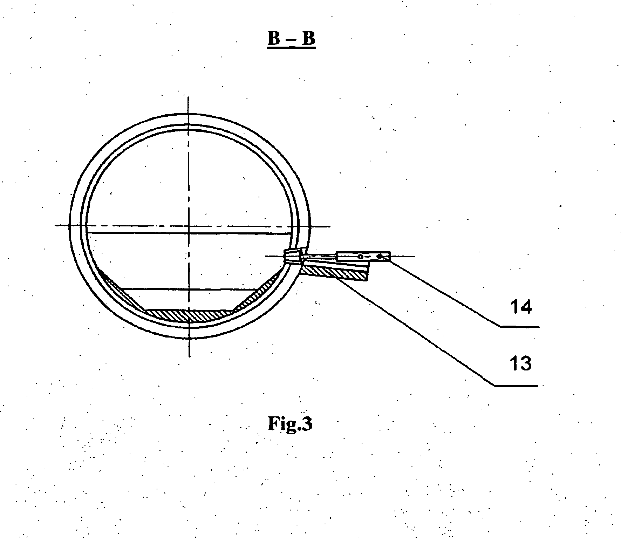

FIG. 3 is a cross-sectional view of the unit for waste-free thermal processing of solid municipal wastes along the B-B line.

The method for waste-free thermal processing of solid municipal wastes is performed as follows:
Low melting point wastes of ferrous metals (pig iron chips and fine steel crops) are charged into a chamber 3. Combined fuel-oxygen burner-tuyeres 4 are turned on to operate as burners and a liquid metal bath is produced to prevent destruction of the refractory lining of the metal bath by liquid superheated slag. Low melting point fluxes (left over from copper and nickel production) are charged into melting chamber 3 and a slag bath of required weight is then produced. As slag is produced, damp solid municipal wastes are charged into a rotating furnace 1 and dried by nitrogen heated to between 200°C and 300°C. After the required slag bath has been produced, combined burner-tuyeres 4 are switched over to oxygen tuyere operation, and an airtight mechanism 2 charges the dried wastes at a preset rate into melting chamber 3 over the surface of the superheated slag melt. The organic components of the solid municipal wastes are oxidized rapidly in the oxygen atmosphere releasing a large amount of heat, the mineral components of the solid municipal wastes melt and sink into the slag, the slag temperature rises to between 1500°C and 1650°C, and the temperature of the gaseous phase over the slag in the free space of melting chamber 3 rises to between 1800°C and 1900°C. The spent process gases flow through an opening 6 having a cooled pipe 7 in the shorter wall of chamber 3 to an exhaust heat boiler (not shown in the drawings) to be combusted completely, and the heat of combustion gases is used to produce hot steam for generating electric power. Excess slag is used to drain slag continuously from melting chamber 3 through slag outlet opening 13, and the slag draining rate is maintained by a device 14 for a constant quantity of slag to be present in melting chamber 3.

Oxygen is blown by combined burner-tuyeres 4 into the working space of chamber 3 to oxidize the organic components of the wastes at a rate between 250 and 390 nm³/ton of dry wastes. Fluxes are charged into melting chamber 3 together with the solid municipal wastes to adjust the composition and properties of the slag at a rate of 10% to 20% of the weight of the dry wastes. Metal accumulating on the bottom of melting chamber 3 is drawn off periodically from the chamber through a taphole 12 provided with a shutoff device (not shown in the drawings).

The unit for waste-free thermal processing of solid municipal wastes comprises a melting chamber 3 having a housing 5 cooled by liquid metal coolant, the working space thereof being used to process solid municipal wastes and containing slag melt and some liquid metal produced from the metal components of the wastes in a lined bath 8. The working space of melting furnace 3 is enclosed in a hollow metal housing containing a liquid metal coolant. The housing of melting furnace 3 is cooled on the outside by nitrogen and covered by a metal shell limiting the space for nitrogen circulation in a secondary cooling system of chamber 3. Combined fuel-oxygen burner-tuyeres are fitted in the walls of the housing of melting chamber 3 to melt a slag bath when the process is started and oxygen is supplied for oxidizing the organic components as they are processed. Injectors 10 are further provided in the walls of the housing of chamber 3 for blowing dust trapped by gas cleaning devices into the slag melt. The shorter wall of melting chamber 3 has an opening 6 of 0.5 to 2.0 m in diameter for removing hot process gases. Opening 6 is connected to an exhaust heat boiler (not shown in the drawings) cooled by a pipe 7 of the same diameter. The opposite part of melting chamber 3 is provided with a charging opening 11 for charging dried municipal wastes and fluxes into chamber 3, said charging opening being connected to an airtight mechanism 2 for charging measured quantities of solid municipal wastes. The side wall of the housing of melting chamber 3 is provided with an outlet opening 13 to drain off excess slag and with a device 14 to control the slag draining rate and maintaining a constant quantity of slag in melting chamber 3 as excess slag is drained continuously from the chamber.

Secondary cooling system 9 of the housing of melting chamber 3 is connected directly to rotating furnace 1 that dries solid municipal wastes for delivering nitrogen heated to between 200°C and 300°C to furnace 1.

The unit operates as follows:
As the process is started up, combined burner-tuyeres 4 melt and heat the required quantity of slag of low melting point fluxes, for example, slags resulting from copper and nickel production, charged into melting furnace 3. While a slag bath is melted, damp solid municipal wastes are charged into the intake device of rotating furnace 1. Hot nitrogen at a temperature of 200°C to 300°C is forced from secondary cooling system 9 of melting chamber 3 in a direction opposite to the flow of the wastes. After the required quantity of slag has been melted and heated, the dry wastes are charged by airtight measuring mechanism 2 into chamber 3 at a rate needed to maintain the required ratio of the weights of wastes charged per minute to the molten slag in the working space of chamber 3. The organic components of the wastes are oxidized by oxygen blown by combined burner-tuyeres 4 operated as oxygen tuyeres into the working space. The hot process gases are removed from chamber 3 through opening 6 in the shorter wall of the chamber and delivered by cooled pipe 7 to the exhaust heat boiler. Excess slag is drained from the melting chamber through slag outlet opening 13 at a rate allowing a constant quantity of slag to be maintained in chamber 3. The draining rate of excess slag is controlled by device 14. Cold nitrogen is fed into secondary cooling system 9 to remove heat from the liquid metal coolant and is heated to a temperature of 200°C to 300°C, and is then delivered to rotating furnace 1 to dry solid municipal wastes. The dust trapped in gas cleaning devices is blown by injectors 10 into the slag melt in the working space of melting chamber 3.

Examples of specific embodiments confirming the possibility of the claimed method and unit for performing the same being used in industrial applications:

### Example 1

A muffle furnace was filled with nitrogen heated to a required temperature and 2 kg of damp solid municipal wastes at a moisture content of 30% were charged into the furnace and dried for one hour as the vapor released thereby was removed and condensed. Experiments were conducted at furnace temperatures of 150°C, 200°C, and 250°C. The results of the experiments are given in Table 1. As shown in the Table, higher temperatures of the gaseous phase used to dry solid municipal wastes accelerate the drying process. Still higher gas temperatures were not used in the experiments because the maximum nitrogen temperature at the outlet of the secondary cooling system of the melting chamber is not higher than 300°C.

A lower gaseous phase temperature, between 195°C and 199°C, slows down SMW drying and reduces the efficiency of at least the rotating furnace and the unit as a whole.

**Table 1**

| Nitrogen temperature, °C | Number of experiments | Initial moisture content, % | Quantity of condensed moisture, average, g |
|---|---|---|---|
| 150 | 3 | 30.0 | 200 |
| 200 | 3 | 30.0 | 300 |
| 250 | 3 | 30.0 | 400 |

### Example 2

The following experiments were performed in a transparent hydraulic model of the claimed unit built on a 1:10 scale. Slag melt was simulated by water, and compressed air simulating oxygen was blown into water at a rate determined in accordance with the principles of the similarity theory. In one series of experiments, fine cork crumbs simulating wastes were charged into the working space of the model through the same opening that was used to remove (pump out) excess air from the model in the top part of the model, and particles drawn off were trapped. In a second series of experiments, cork crumbs were charged in through the same opening and excess air was removed from another opening in the opposite shorter wall of the model, and the particles drawn off were trapped as well. The weight of particles washed out of the working space of the model in the first series of experiments was 8.5 times the weight of particles escaping from the working space of the model in the second series of experiments. The results produced provide evidence in favor of wastes being charged into, and process gases removed from, the melting chamber through different spaced openings.

### Example 3

A 5 ton layer of slag was melted in an arc steel furnace of 6 ton capacity and the slag was heated to 1600°C. Oxygen was injected into the furnace and batches of dried solid municipal wastes (at 10% moisture content) were charged periodically on to the molten slag such that the ratio of the weight of the wastes charged to the weight of the slag melted in the furnace varied within the ranges of 0.010-0.011, 0.0067-0.0062, and 0.0050-0.0045

The time of complete combustion of the organic component of the wastes and complete melting of the mineral component of the wastes was clocked for each batch of the wastes charged in. The results of the experiments are given in Table 2.

**Table 2**

| Ratio of the weight of wastes charged per minute to the weight of slag | Time of complete combustion of the organic components and complete melting of mineral components, seconds |
|---|---|
| 0.0100-0.0110 | 65.0 |
| 0.0067-0.0062 | 19.0 |
| 0.0050-0.0045 | 10.0 |

The results obtained confirm the possibility of wastes charged being heated rapidly at the ratio of the weight of wastes charged per minute to the weight of molten slag within the range of 0.0067-0.0045.

### Example 4.

Solid municipal wastes were incinerated on a layer of molten slag in a graphite crucible of an electroslag remelting unit, together with a quantity of fluxes. The fluidity of slag produced from the wastes was determined at 1600°C.

Slags produced from wastes processed with addition of 15% to 17% of acidic slag resulting from nickel production had the highest fluidity. Slag had a low fluidity when flux was added in quantities less than 9% of the weight of the slag produced.

### BIBLIOGRAPHY:

1. Patent RU 2045703 for a Method for Thermal Processing of Solid Wastes. Applicant and patent holder: Algon CJSC. Inventors: A.B. Usachev, V.A. Romenets, V.R. Grebenshchikov, A.V. Balasanov, and V.O. Churgel.
2. Patent RU 2045708 for a Method for Processing Solid Municipal Wastes. Applicant and patent holder: Geintsvetmet. Inventors: Ye.I. Kalnin, A.V. Grechko, V.V. Mechev, V.F. Denisov, L.D. Shishkina, V.Ye. Ziberov, Ye.Kh. Khailov, and V.A. Generalov.
3. Patent RU 2064506, IPC-6, for a Method for Processing Solid Municipal Wastes in Slag Melt. Applicants: V.N. Rottekberg and L.V. Yelenina, who are also the inventors and patent holders.
4. Patent RU 2208202 for a Method for Processing Solid Municipal Wastes and Finely Dispersed Industrial Wastes. Applicant: Lipetskstalproject OJSC. Inventors and patent holders: A.F. Reshetnyak, V.A. Konev, N.I. Seryakov, and A.N. Mamaev.
5. Patent RU 2265774 for a Method for Processing Solid Domestic, Industrial, and Medical Wastes. Inventors: A.V. Balasanov, S.V. Batygin, M.N. Bernadiner, Yu.M. Grinberg, A.G. Devitaikin, A.V. Lebedev, I.Ye. Teslika, A.B. Usachev, and B.S. Gaikin. Patent holders: VNIIETO CJSC and Stalproject LLC.
6. Patent RU 2343353 for a Method for Waste-Free Thermal Processing of Solid Municipal Wastes. Inventors: A.A. Golubev and Yu.A. Gudim. Patent holder: Tekhnologiya metallov Industrial Company, LLC (RU).
7. Patent RU 2344179 for a Method for Continuous Processing of Materials Containing Ferric Oxides and a Unit for Performing the Same. Inventors: A.A. Golubev and Yu.A. Gudim. Patent holder: Tekhnologiya metallov Industrial Company, LLC (RU).

## Claims

1. A method for waste-free thermal processing of solid municipal wastes, comprising
drying the wastes before delivery thereof to a melting chamber (3);
charging said wastes into the melting chamber (3);
combusting the organic components of the wastes in an oxygen atmosphere on the surface of molten slag produced from the mineral components of the wastes and fluxes added in the melting chamber (3) having a housing (5) that is cooled by a liquid metal coolant;
afterburning said components;
using the heat of the gases produced;
cleaning said gases; and
drawing off excess slag and metal accumulating in said melting chamber (3);
wherein the solid municipal wastes are dried by gaseous nitrogen heated by said liquid metal coolant in a secondary cooling system (9) of the melting chamber (3):
**characterized in that**
solid municipal wastes are dried in a rotating furnace (1) by gaseous nitrogen heated to between 200°C and 300°C;
a measured quantity of dried wastes is charged into the melting chamber (3) per minute at a ratio of the weight of the dried wastes to the weight of the molten slag per minute varying within m : M = 0.0067 - 0.0045, wherein m is the weight of the dried wastes charged into the melting chamber (3) and M is the weight of molten slag in the working space of the melting chamber (3);
the temperature of the gaseous phase over the slag in the free space of the melting chamber (3) is maintained within 1800°C to 1900°C;
the spent process gases are removed from the melting chamber (3) to an exhaust heat boiler through an opening (6) provided in a shorter wall of the melting chamber (3) and having a cooled pipe (7); and
the rate at which excess slag is drained continuously from the melting chamber (3) is maintained at a level assuring the presence of a constant quantity of slag in the melting chamber (3).

2. A method of claim 1, wherein oxygen for oxidizing the organic components of solid municipal wastes is blown by combined burner-tuyeres (4) into the working space of the melting chamber (3) at a rate of 250-390 nm³/ton of dry wastes.

3. A method of claim 1, wherein the fluxes needed to adjust the composition and properties of the slag are charged into the melting chamber (3) together with solid municipal wastes at a rate of 10% to 20% of the weight of the dry wastes.

4. A unit for waste-free thermal processing of solid municipal wastes, comprising
a melting chamber (3) having a cooling system (9) to cool the housing of the melting chamber (3) with a liquid metal coolant and heating gaseous nitrogen;
an airtight mechanism (2) for charging dry wastes into the melting chamber (3) and connected to said melting chamber (3) through a charging opening:
combined burner-tuyeres (4) and injectors in the walls thereof to blow in dust;
devices for drawing off excess slag and metal, whereby a side wall of the melting chamber (3) is provided with an outlet opening (13) to drain slag;
**characterized by**
further comprising a rotating furnace (1) to dry the wastes,
the airtight mechanism (2) charging measured quantities of dry wastes into the melting chamber (3),
a shorter wall of the melting chamber (3) being provided with an opening (6) having a cooled pipe (7) to remove hot spent process gases and deliver them to an exhaust heat boiler;
a device to maintain a constant quantity of slag in the melting chamber (3) as excess slag is drained from the melting chamber (3); and
the cooling system (9) being connected to the rotating furnace (1) and delivering gaseous nitrogen heated to between 200°C and 300°C to said rotating furnace (1).

5. A unit for waste-free thermal processing of solid municipal wastes of claim 4, wherein the opening for charging solid municipal wastes and fluxes into the melting chamber (3) is provided in the shorter or longer side wall of the housing of the part of the melting chamber (3) opposite to the opening (6) for removing gases.

6. A unit for waste-free thermal processing of solid municipal wastes of claim 4, wherein the opening (6) for removing hot spent process gases has a diameter of 0.5 to 2.0 m.

## Patentansprüche

1. Verfahren zur abfallfreien thermischen Behandlung von festen städtischen Abfällen, aufweisend:
Trocknen der Abfälle vor deren Übergabe an eine Schmelzkammer (3);
Laden der Abfälle in die Schmelzkammer (3);
Verbrennen der organischen Bestandteile der Abfälle in einer Sauerstoffatmosphäre auf der Oberfläche einer geschmolzenen Schlacke, die aus den mineralischen Bestandteilen der Abfälle und aus Flussmitteln erzeugt wurde, die in der Schmelzkammer (3), die ein Gehäuse (5) besitzt, das mit einem Flüssigmetall-Kühlmittel gekühlt wird, zugegeben wurden;
Nachverbrennung dieser Bestandteile;
Verwendung der Wärme der erzeugten Gase;
Reinigen der Gase; und
Abziehen von überschüssiger Schlacke und von Metall, die sich in der Schmelzkammer (3) ansammeln,
wobei die festen städtischen Abfälle durch gasförmigen Stickstoff getrocknet werden, der durch das Flüssigmetall-Kühlmittel in einem zusätzlichen Kühlsystem (9) der Schmelzkammer (3) aufgeheizt wird;
**dadurch gekennzeichnet, dass**
feste städtische Abfälle in einem Drehofen (1) mit gasförmigem Stickstoff auf 200°C bis 300°C erhitzt werden;
eine abgemessene Menge an getrockneten Abfällen in die Schmelzkammer (3) pro Minute bei einem Verhältnis des Gewichts der getrockneten Abfälle zum Gewicht der geschmolzenen Schlacke pro Minute variierend innerhalb von m:M = 0,0067 bis 0,0045 geladen wird, wobei m das Gewicht der getrockneten Abfälle ist, die in die Schmelzkammer (3) geladen sind, und M das Gewicht der geschmolzenen Schlacke im Arbeitsraum der Schmelzkammer (3) ist;
die Temperatur der Gasphase über der Schlacke in dem freien Raum der Schmelzkammer (3) innerhalb von 1800°C bis 1900°C gehalten wird;
die verbrauchten Prozessgase aus der Schmelzkammer (3) zu einem Abhitzekessel durch eine Öffnung (6) transportiert werden, die in einer kürzeren Wand der Schmelzkammer (3) vorgesehen ist und eine gekühlte Leitung (7) besitzt; und
die Rate, mit der überschüssige Schlacke kontinuierlich aus der Schmelzkammer (3) abgelassen wird, auf einem Niveau gehalten wird, welches das Vorliegen einer konstanten Menge von Schlacke in der Schmelzkammer (3) sicherstellt.

2. Verfahren nach Anspruch 1, wobei Sauerstoff zur Oxidation der organischen Bestandteile der festen städtischen Abfälle durch kombinierte Brenner-Düsen (4) in den Arbeitsraum der Schmelzkammer (3) mit einer Geschwindigkeit von 250-390 nm³/Tonne von trockenen Abfällen geblasen wird.

3. Verfahren nach Anspruch 1, wobei die Flussmittel, die benötigt werden, um die Zusammensetzung und die Eigenschaften der Schlacke einzustellen, in die Schmelzkammer (3) zusammen mit festen städtischen Abfällen mit einer Rate von 10% bis 20% des Gewichts des trockenen Abfälle geladen werden.

4. Anlage für die abfallfreie thermische Verarbeitung von festen städtischen Abfällen, aufweisend
eine Schmelzkammer (3), die ein Kühlsystem (9) besitzt, um das Gehäuse der Schmelzkammer (3) mit einem Flüssigmetall-Kühlmittel zu kühlen, und gasförmigen Stickstoff aufheizt;
ein luftdichter Mechanismus (2) zum Laden von trockenen Abfällen in die Schmelzukammer (3) und verbunden mit der Schmelzkammer (3) durch eine Ladeöffnung;
kombinierte Brenner-Düsen (4) und Einspritzventile in den Wänden davon, um Staub einzublasen; und
Geräte zum Abziehen von überschüssiger Schlacke und Metall, wobei eine Seitenwand der Schmelzkammer (3) mit einer Auslassöffnung (13) zum Abziehen von Schlacke vorgesehen ist;
**gekennzeichnet durch**
ferner aufweisend einen Drehofen (1), um die Abfälle zu trocknen,
wobei der luftdichte Mechanismus (2) abgemessene Mengen trockener Abfälle in die Schmelzkammer (3) lädt,
eine kürzere Wand der Schmelzkammer (3), die mit einer Öffnung (6) mit einem gekühlten Rohr (7) zum Entfernen heißer verbrauchter Prozessgase und zum Liefern von ihnen in einen Abhitzekessel ausgestattet ist;
eine Vorrichtung, um eine konstante Menge von Schlacke in der Schmelzkammer (3) zu halten (3), wenn überschüssige Schlacke aus der Schmelzkammer (3) abgelassen wird; und
wobei das Kühlsystem (9) mit dem Drehofen (1) verbunden ist und gasförmigen Stickstoff, der auf 200°C bis 300°C erhitzt ist, zum Drehofen (1) liefert.

5. Anlage für die abfallfreie thermische Verarbeitung von festen städtischen Abfällen nach Anspruch 4, wobei die Öffnung zum Laden von festen städtischen Abfällen und Flussmitteln in die Schmelzkammer (3) in der kürzeren oder längeren Seitenwand des Gehäuses des Teils der Schmelzkammer (3) vorgesehen ist, die sich gegenüber der Öffnung (6) zum Entfernen von Gasen befindet.

6. Anlage für die abfallfreie thermische Verarbeitung von festen städtischen Abfällen nach Anspruch 4, wobei die Öffnung (6) zum Entfernen von verbrauchten heißen Prozessgasen einen Durchmesser von 0,5 bis 2,0 m aufweist.

## Revendications

1. Un procédé de traitement thermique sans déchets des déchets municipaux solides, comprenant
séchage des déchets avant la livraison de celui-ci à une chambre de fusion (3) ;
charger lesdits déchets dans la chambre de fusion (3) ;
combustion des composants organiques des déchets dans une atmosphère d'oxygène sur la surface du laitier fondu produit à partir des composants minéraux des déchets et des fondants ajoutés dans la chambre de fusion (3) ayant un boîtier (5) qui est refroidi par un métal liquide de refroidissement ;
post-combustion desdits composants ;
utiliser la chaleur des gaz produits ;
nettoyage dudit gaz, et
écrémage excès laitier et le métal s'accumule dans la chambre de fusion (3) ;
dans lequel les déchets municipaux solides sont séchées par de l'azote gazeux chauffé par ledit métal liquide de refroidissement dans un système de refroidissement secondaire (9) de la chambre de fusion (3) ;
**caractérisé en ce que**
les déchets municipaux solides sont séchées dans un four rotatif (1) par de l'azote gazeux chauffé entre 200 ° C et 300 ° C ;
une quantité mesurée de déchets séchés est introduite dans la chambre de fusion (3) par minute à un rapport de la masse des déchets séchés au poids de la scorie en fusion par minute variant à l'intérieur de m : M = 0,0067 - 0,0045, dans lequel m est égal à le poids des déchets secs chargée dans la chambre de fusion (3) et M est le poids du laitier en fusion dans l'espace de travail de la chambre de fusion (3) ;
la température de la phase gazeuse au-dessus de la scorie dans l'espace libre de la chambre de fusion (3) est maintenu à l'intérieur de 1800 ° C à 1900 ° C ;
les gaz de traitement usés sont enlevés de la chambre de fusion (3) à une chaudière à chaleur d'échappement à travers une ouverture (6) ménagée dans une paroi inférieure de la chambre de fusion (3) et ayant un tube refroidi (7) ; et
la vitesse à laquelle le laitier en excès est évacuée en continu à partir de la chambre de fusion (3) est maintenue à un niveau assurant la présence d'une quantité constante de scories dans la chambre de fusion (3).

2. Procédé selon la revendication 1, dans lequel l'oxygène pour oxyder les composants organiques des déchets municipaux solides est soufflé par les tuyères de brûleur combiné (4) dans l'espace de travail de la chambre de fusion (3) à un débit de 250 à 390 nm³/ton de sec déchets.

3. Procédé selon la revendication 1, dans lequel les flux nécessaires pour ajuster la composition et les propriétés du laitier sont introduits dans la chambre de fusion (3) ensemble avec les déchets municipaux solides, à raison de 10% à 20% du poids de la sec déchets.

4. Un appareil pour le traitement thermique de déchets municipaux solides sans déchets, comprenant
une chambre de fusion (3) ayant un système de refroidissement (9) afin de refroidir le boîtier de la chambre de fusion (3) avec un liquide de refroidissement du métal liquide et à chauffer l'azote gazeux;
un mécanisme étanche à l'air (2) destiné à charger les déchets secs dans la chambre de fusion (3) et relié à ladite chambre de fusion (3) à travers une ouverture de chargement ;
brûleur-tuyères combinés (4) et les injecteurs dans les parois de celui-ci pour souffler la poussière; et
les dispositifs de soutirage des scories et du métal en excès, de sorte qu'une paroi latérale de la chambre de fusion (3) est munie d'une ouverture de sortie (13) pour drainer les scories,
**caractérisé par**
comprenant en outre un four rotatif (1) pour sécher les déchets,
le mécanisme étanche à l'air (2) de chargement des quantités mesurées de déchets secs dans la chambre de fusion (3);
une paroi inférieure de la chambre de fusion (3) étant pourvu d'une opneing (6) ayant une conduite refroidie (7) pour éliminer les gaz de processus chauds usé et les livrer à une chaudière à chaleur d'échappement;
un dispositif pour maintenir une quantité constante de scories dans la chambre de fusion (3), l'excès de scorie est évacuée de la chambre de fusion (3); et
le système de refroidissement (9) étant reliée au four rotatif (1) et délivrant de l'azote gazeux chauffé entre 200 ° C et 300 ° C dans ledit four rotatif (1).

5. Un appareil pour le traitement thermique de déchets municipaux solides sans déchets de la revendication 4, dans lequel l'ouverture de chargement des déchets municipaux solides et des flux dans la chambre de fusion (3) est prévu dans la paroi latérale inférieure ou supérieure du boîtier de la partie de la chambre de fusion (3) opposée à l'ouverture (6) pour enlever les gaz.

6. Un appareil pour le traitement thermique de déchets municipaux solides sans déchets de la revendication 4, dans lequel l'ouverture (6) pour retirer les gaz de processus chauds usés a un diamètre de 0,5 à 2,0 m.
